(19) Europäisches Patentamt
European Patent Office
Office européen des brevets

(11) Veröffentlichungsnummer: **0 068 083**
**B1**

(12) **EUROPÄISCHE PATENTSCHRIFT**

(45) Veröffentlichungstag der Patentschrift: **14.05.86**

(51) Int. Cl.⁴: **C 08 G 73/06**, C 08 K 5/34, C 07 D 401/04, C 07 D 251/40

(21) Anmeldenummer: **82102713.3**

(22) Anmeldetag: **31.03.82**

(54) **Poly-bis-triazinylimide, ihre Herstellung, ihre Verwendung als Lichtschutzmittel für Polymere sowie die mit ihnen stabilisierten Polymeren.**

(30) Priorität: **03.04.81 DE 3113455**

(43) Veröffentlichungstag der Anmeldung: **05.01.83 Patentblatt 83/1**

(45) Bekanntmachung des Hinweises auf die Patenterteilung: **14.05.86 Patentblatt 86/20**

(84) Benannte Vertragsstaaten: **AT BE CH DE FR GB IT LI NL SE**

(56) Entgegenhaltungen:
**EP-A-0 013 665**
**EP-A-0 013 682**
**FR-A-2 333 821**
**FR-A-2 372 187**

(73) Patentinhaber: **HOECHST AKTIENGESELLSCHAFT, Postfach 80 03 20, D-6230 Frankfurt am Main 80 (DE)**

(72) Erfinder: **Wiezer, Hartmut, Dr., Am Stocket 18, D-8901 Lützelburg (DE)**
Erfinder: **Pfahler, Gerhard, Dr., Karlsbader Strasse 27, D-8900 Augsburg (DE)**

**EP 0 068 083 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft neue Poly-bis-triazinylimide, ein Verfahren zu ihrer Herstellung und ihre Verwendung als Stabilisatoren für synthetische Polymere.

Die neuen Poly-bis-triazinylimide entsprechen der Formel (I)

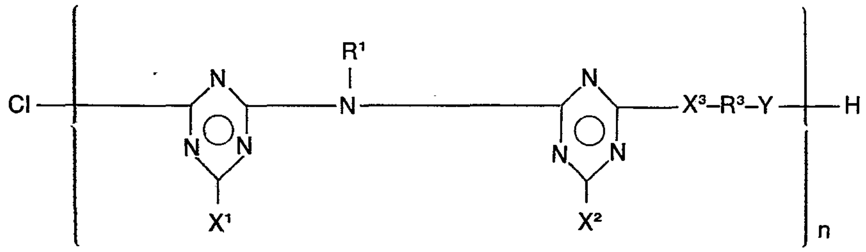

(I),

in welcher

n für eine ganze Zahl von 2 bis 10 steht.

$X^1$ und $X^2$ stehen für gleiche oder verschiedene, vorzugsweise gleiche Reste und haben die Bedeutung von Chlor, Phenyl, –OH, –ONa oder einer Gruppe der Formel (II), (III), (IV) oder (V), vorzugsweise (II), (III) oder (IV), insbesondere (II) oder (IV).

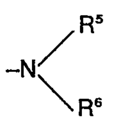

(II),

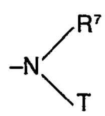

(III),

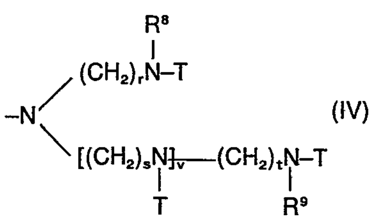

(IV)

$-OR^{10}$ (V)

In Formel (II) bedeutet

$R^5$ Wasserstoff, $C_1$- bis $C_{18}$-Alkyl, bevorzugt unsubstituiertes, gegebenenfalls aber auch durch eine $C_1$- bis $C_4$-Alkylgruppe substituiertes $C_5$- bis $C_{12}$-Cycloalkyl, $C_3$- bis $C_{12}$-Alkenyl, bevorzugt unsubstituiertes, gewünschtenfalls jedoch durch ein oder zwei Cl, oder eine oder zwei $C_1$- bis $C_4$-Alkylgruppen, oder $C_1$- bis $C_4$-Alkoxi, oder $C_1$- bis $C_2$-Carbalkoxi substituiertes Phenyl oder $C_7$- bis $C_{14}$-, vorzugsweise $C_7$- bis $C_9$-Phenylalkyl, oder eine Gruppe der Formel (VI)

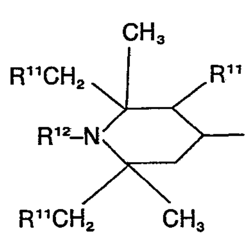

(VI),

wobei in Formel (VI) dann

$R^{11}$ Wasserstoff oder Methyl, vorzugsweise Wasserstoff und

$R^{12}$ Wasserstoff, $C_1$- bis $C_4$-Alkyl, das durch eine oder zwei OH-Gruppen substituiert sein kann, 2,3-Epoxipropyl, Allyl oder Benzyl, vorzugsweise jedoch Wasserstoff ist.

$R^6$ ist gleich oder verschieden von $R^5$ und hat die unter $R^5$ angegebenen Bedeutungen, sowie zusätzlich die von $C_3$- bis $C_{21}$-Alkoxialkyl, vorzugsweise $C_1$- bis $C_{18}$-Alkoxipropyl und insbesondere $C_1$- bis $C_2$-Alkoxipropyl, von $C_1$- bis $C_{18}$-, vorzugsweise $C_1$-bis $C_4$-Hydroxialkyl oder von Dimethyl- oder Diethylamino-$C_2$- bis $C_5$-alkyl.

$R^5$ und $R^6$ können ferner zusammen mit dem sie bindenden N-Atom für einen Pyrrolidin- oder einen unsubstituierten oder durch bis zu vier $C_1$- bis $C_4$-Alkylgruppen, vorzugsweise Methylgruppen substituierten Piperidin-, Morpholin- oder Hexamethyleniminring stehen.

In Formel (III) hat

$R^7$ die unter $R^6$ angegebenen Bedeutungen und steht

T für eine Gruppe der Formel (VII)

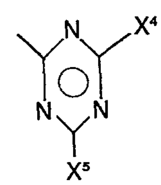

(VII),

in welcher

$X^4$ und $X^5$ gleiche oder verschiedene Reste der Formel (II), (IV) oder (V), vorzugsweise (II) oder (IV), sind.

In Formel (IV) bedeuten die Indices

r, s und t gleiche oder unterschiedliche ganze Zahlen von 2 bis 6, vorzugsweise 2 oder 3,

v eine ganze Zahl von 0 bis 3, vorzugsweise 0 oder 1 und insbesondere 0, und stehen

$R^8$ und $R^9$ für gleiche oder verschiedene Reste mit der Bedeutung von $R^5$, vorzugsweise für Wasserstoff oder eine Gruppe der Formel (VI) und insbesondere für Wasserstoff, und hat

T die vorstehend angegebenen Bedeutungen.

In Formel (V) steht

$R^{10}$ für die unter $R^5$ aufgeführten Reste.

$R^1$ steht für einen der unter $R^6$ aufgeführten Reste.

$X^3$ steht für den Rest

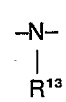

mit
$R^{13}$ = einer der unter $R^5$ angeführten Reste oder Hydroxialkyl und
Y für die Gruppe

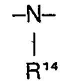

mit
$R^{14}$ = gleiche oder verschiedene Reste $R^5$.

$R^3$ steht für $C_1$- bis $C_{18}$-, vorzugsweise $C_2$bis $C_{12}$- und insbesondere $C_2$- bis $C_6$-Alkylen, für $C_2$- bis $C_{12}$-Bis-(propyloxi)-alkylen, für $C_6$-bis $C_{18}$-, vorzugsweise $C_6$- bis $C_{12}$- unsubstituiertes oder durch bis zu vier Methylgruppen substituiertes, vorzugsweise jedoch unsubstituiertes Mono-, Di- oder Tricycloalkylen, in welchem bei dem erstgenannten zwei C-Atome durch N-Atome, welche Propylengruppen tragen können, ersetzt sein können, für $C_6$- bis $C_{18}$-Arylen, vorzugsweise Phenylen, oder für $C_7$- bis $C_{18}$-Aralkylen.

Anstelle der Gruppierung $-X^3-R^3-Y-$ können ferner Piperazinylenreste oder bicyclische Reste mit 5 bis 12 C-Atomen, die im Ring ein –N-Atom tragen und durch eine Amino- und/oder Aminomethylengruppe substituiert sind, treten.

In Formel (I) muss mindestens einer der Reste $X^1$, $X^2$, $X^3$, Y oder $R^1$ eine Gruppe der Formel (VI) enthalten.

Die Verbindungen der Formel (I) sind bei gleichem $X^3$ und Y isotaktisch, bei verschiedenen ataktisch aufgebaut.

Die Poly-bis-triazinylimide lassen sich in folgender Weise erhalten:

Zunächst werden die als Ausgangsmaterial anzusprechenden Bistriazinylimide synthetisiert, indem man ein substituiertes Triazinylamin der Formel (1),

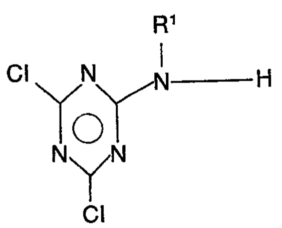

(1),

in welcher $R^1$ die vorstehend angegebene Bedeutung hat, mit der bezogen auf NH-Amidgruppen äquimolaren Menge Cyanurchlorid bei −5 bis +10 °C, vorzugsweise 0 bis 5 °C, umsetzt.

Diese Triazinylimide der Formel (A')

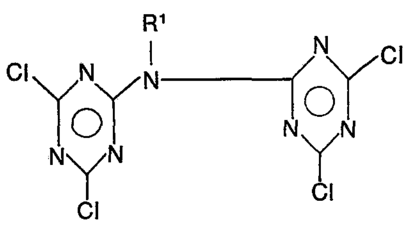

(A'),

in welcher $R^1$ die oben angegebene Bedeutung hat, werden in einem Verfahrensschritt A zur Substitution von jeweils einem der in den einzelnen Triazinringen enthaltenen Chloratome mit der 0,95- bis 1,0fach, vorzugsweise der äquivalenten Menge einer Verbindung der Formel (II), (IV) oder (V), deren freie Valenz durch H abgesättigt ist, oder gegebenenfalls auch eines Gemisches derartiger Verbindungen bei 10 bis 70, vorzugsweise 40 bis 70 und insbesondere 50 bis 70 °C zur Reaktion gebracht.

Nach Verfahrensschritt B erhält man die polymeren Triazinylimide, indem man das so erhaltene, je ein Chloratom in jedem Triazinring enthaltende Bis-triazinylimid der Formel (B')

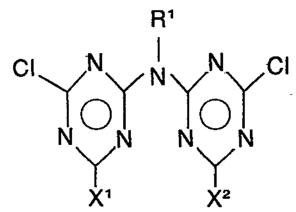

(B')

mit einem Diamin der Formel (C) zur Reaktion bringt,

$$H-X^3-R^3-Y-H \quad (C),$$

wobei in dieser Formel $X^3$, $R^3$ und Y die vorstehend angegebenen Bedeutungen haben. Es wird die 0,8- bis 1,2fache, vorzugsweise 0,95- bis 1,05fache und insbesondere die äquimolare Menge Diamin eingesetzt, und man arbeitet bei 50 bis 200, vorzugsweise 100 bis 180 und insbesondere 130 bis 180 °C.

Die bei den einzelnen Verfahrensstufen anfallenden Produkte werden im allgemeinen jeweils isoliert, es ist jedoch auch möglich, die aufeinander folgenden Reaktionsschritte ohne Isolierung der Zwischenstufen durchzuführen, wodurch sich das Verfahren besonders einfach gestaltet.

Die erfindungsgemässen Produkte sind farblose bis gelbliche gefärbte Harze, die naturgemäss keine scharfen Schmelzpunkte besitzen.

Alle Umsetzungen werden in inerten organischen Lösungsmitteln, wie z.B. Petrolether, Benzinen, Aceton, Ether, Dioxan, Benzol, Toluol, Xylol, Mesitylen oder Gemischen derselben vorgenommen. Man gibt ferner als Halogenwasserstoffakzeptoren anorganische Basen in äquivalenten Mengen zu. Geeignet sind z.B. Natriumhydroxid, Kaliumhydroxid, Natriumcarbonat und Kaliumcarbonat in fester Form oder wässriger Lösung.

Beispiele für Ausgangs-Bis-(2,4-dichlor-1,3,-triazin-6-yl)-imide der Formel (A') sind:

1. Methyl-bis-(2,4-dichlor-1,3,5-triazin-6-yl)-imid
2. Ethyl-bis-(2,4-dichlor-1,3,5-triazin-6-yl)-imid
3. Butyl-bis-(2,4-dichlor-1,3,5-triazin-6-yl)-imid
4. 2-Ethyl-hexyl-bis-(2,4-dichlor-1,3,5-triazin-6-yl)-imid
5. Hexyl-bis-(2,4-dichlor-1,3,5-triazin-6-yl)-imid
6. Dodecyl-bis-(2,4-dichlor-1,3,5-triazin-6-yl)-imid
7. Octadecyl-bis-(2,4-dichlor-1,3,5-triazin-6-yl)-imid
8. Cyclohexyl-bis-(2,4-dichlor-1,3,5-triazin-6-yl)-imid

9. Benzyl-bis-(2,4-dichlor-1,3,5-triazin-6-yl)-imid
10. 2,4-Dichlorphenyl-bis-(2,4-dichlor-1,3,5-triazin-6-yl)-imid
11. 3-Methoxipropyl-bis-(2,4-dichlor-1,3,5-triazin-6-yl)-imid

Beispiele für monofunktionelle Aminoverbindungen, die sich von den Formeln (II) und (IV) herleiten, sind:

12. 2,2,6,6-Tetramethyl-4-amino-piperidin
13. 2,2,6,6-Tetramethyl-4-butylamino-piperidin
14. 2,2,6,6-Tetramethyl-4-octadecylamino-piperidin
15. 2,2,6,6-Tetramethyl-4-(3-methoxi)-propylaminopiperidin
16. 2,2,6,6-Tetramethyl-4-(3-dimethylamino)-propylaminopiperidin
17. Ammoniak
18. Methylamin
19. Butylamin
20. Hexylamin
21. Dodecylamin
22. 2-Ethyl-hexylamin
23. Octadecylamin
24. Cyclohexylamin
25. Benzylamin
26. 3-Methoxipropylamin
27. 3-Octadecyloxipropylamin
28. 3-Dimethylaminopropylamin
29. Diethylamin
30. Dibutylamin
31. Dicyclohexylamin
32. Dioctadecylamin
33. 1,9-Bis-[2,4-bis-⟨N-(2,2,6,6-tetramethyl-4-piperidyl)-3-methoxipropylamino⟩-1,3,5-triazin-6-yl]-triazanonan-1,5,9
34. 1,7-Bis-[2,4-bis-⟨N-(2,2,6,6-tetramethyl-4-piperidyl)-3-methoxipropylamino⟩-1,3,5-triazin-6-yl]-1,4,7-triazaheptan
35. 1,5,12-Tris-[2,4-bis-⟨N-(2,2,6,6-tetramethyl-4-piperidyl)-3-methoxipropylamino⟩-1,3,5-triazin-6-yl]-1,5,8,12-tetra-azadodecan
36. 2-Aminopropanol-1
37. 2,2,6,6-Tetramethyl-4-(3-ethoxi)-propylamino-piperidin

Beispiele für bifunktionelle Aminoverbindungen der Formel (C) sind:

38. 1,2-Diaminoethan
39. 1,3-Diaminopropan
40. 1,6-Diaminohexan
41. 3-Methylaminopropylamin
42. 3-Cyclohexylaminopropylamin
43. 4,7-Dioxadecan-1,10-diamin
44. 4,9-Dioxadodecan-1,12-diamin
45. N,N'-Bis-cyclododecyl-1,6-diaminohexan
46. 1,3-Bis-(aminomethyl)-cyclohexan
47. Bis-(4-aminocyclohexyl)-methan
48. N,N'-Bis-(3-aminopropyl)-piperazin
49. Piperazin
50. 2(3),5(6)-Bis-(aminomethyl)-norbornan (Isomerengemisch)
51. 3(4),8(9)-Bis-(aminomethyl)-tricyclo-[5.2.1.0$^{2,6}$]-decan (Isomerengemisch)
52. 1-Amino-2-(aminomethyl)-3,3,5-trimethylcyclopentan
53. 1-Amino-3-aza-5,7,7-trimethyl-bicyclo-[3.3.1]-nonan
54. N,N'-Bis-(2,2,6,6-tetramethyl-4-piperidyl)-1,2-diaminoethan
55. N,N'-Bis-(2,2,6,6-tetramethyl-4-piperidyl)-1,6-diaminohexan
56. N-(2,2,6,6-Tetramethyl-4-piperidyl)-1,6-diaminohexan
57. N,N'-Bis-(2,2,6,6-tetramethyl-4-piperidyl)-1,3-bis-(aminomethyl)-cyclohexan
58. N-(2,2,6,6-Tetramethyl-4-piperidyl)-1,3-bis-(aminomethyl)-cyclohexan
59. N,N'-Bis-(2,2,6,6-tetramethyl-4-piperidyl)-4,7-dioxadecan-1,10-diamin
60. N,N'-Bis-(2,2,6,6-tetramethyl-4-piperidyl)-2(3),5(6)-bis-aminomethyl)-norbornan (Isomerengemisch)
61. N-(2,2,6,6-Tetramethyl-4-piperidyl)-2(3),5(6)-bis-(aminomethyl)-norbornan (Isomerengemisch)
62. N,N'-Bis-(2,2,6,6-tetramethyl-4-piperidyl)-3(4),8(9)-bis-(aminomethyl)-tricyclo-[5.2.1.0$^{2,6}$]-decan (Isomerengemisch)
63. N(N')-(2,2,6,6-Tetramethyl-4-piperidyl)-3(4),8(9)-bis-(aminomethyl)-tricyclo-[5.2.1.0$^{2,6}$]-decan (Isomerengemisch)

Aus zahlreichen Veröffentlichungen sind eine Vielzahl von Polyalkylpiperidylgruppen-enthaltenden Triazinstabilisatoren bekannt (DE-PSS 2 636 130, 2 636 144, DE-OSS 2 752 740, 2 933 078, 2 944 729, 3 022 896, 3 027 223, 3 045 839, europäische Patentanmeldungen 2 754, 3 542, 13 665 und 14 683). Von ihnen kommen in der DE-OS 3 045 839 beschriebenen Poly-bis-triazinylamine, in denen zwei durch eine Diaminoverbindung verknüpfte Triazinringe eine wiederkehrende Struktureinheit bilden, den erfindungsgemässen Poly-bis-triazinylimiden strukturell zweifellos am nächsten.

Dass Polyimide für Stabilisierungszwecke in Frage kommen können, ist in der DE-OS 2 719 131, Seite 35, letzter Absatz, zwar angedeutet, es fehlen jedoch jegliche Angaben darüber, welche definierte Struktur solche Imide haben sollen und welche Eigenschaften sie im einzelnen besitzen. Dies lässt den Schluss zu, dass sie den in dieser Offenlegungsschrift beschriebenen und als besonders vorteilhaft bezeichneten Polyestern, Polyamiden, Polyurethanen, Polyharnstoffen und Polysilylestern nicht ebenbürtig zu sein scheinen, um so mehr, als kein Vertreter dieser Substanzklasse beispielhaft vorgestellt wird.

Überraschenderweise sind nun die erfindungsgemässen, neuen Poly-bis-triazinylimide den in der DE-OS 2 719 131 als aussergewöhnlich brauchbar dargestellten, obengenannten Verbindungen nicht nur gleichwertig, sondern vielmehr deutlich überlegen, wobei sich diese Überlegenheit auf die Flüchtigkeit, Auswaschresistenz, Verträglichkeit und Wirksamkeit, also auf alle anwendungstechnisch relevanten Kriterien bezieht. Dass diese Überlegenheit trotz des Vorhandenseins der reaktiven und unbeständigen Imidgruppe zu verzeichnen ist, war nicht zu erwarten und ist als völlig überraschend anzusehen.

Nicht vorhersehbar war weiterhin, dass sich die erfindungsgemässen Imide auch gegenüber den Triazinylamiden der DE-OS 3 045 839 trotz der strukturellen Bedenken als mindestens gleichwertig erweisen.

Die neuen Poly-bis-triazinylimide lassen sich problemlos in die zu stabilisierenden Polymeren einarbeiten und sind hervorragend zum Stabilisieren derselben gegen den lichtinduzierten oxidativen Abbau geeignet. Neben der ausgezeichneten Stabilisatorwirksamkeit zeichnet die neuen Stabilisatoren ihre Verträglichkeit mit den zu stabilisierenden Polymeren, ihre Migrationsfestigkeit gegen das Auswaschen mit wässrigen Medien, welche bei der Freibewitterung eine bedeutende Rolle spielt, ihre Thermostabilität auch bei hohen Verarbeitungstemperaturen und ihre geringe Flüchtigkeit, insbesondere im Vergleich zur Verbindung des Beispiels 1 der DE-OS 2 719 131, aus.

Die neuen Substanzen dienen – wie bereits erwähnt – als Stabilisatoren für Kunststoffe und verhindern deren Schädigung durch Einwirkung von Sauerstoff, Wärme und Licht. Beispiele für solche Kunststoffe sind:

Polymere, die sich von einfach oder doppelt ungesättigten Kohlenwasserstoffen ableiten, z.B. Polyolefine wie Polyethylen, das gegebenenfalls vernetzt sein kann, Polypropylen, Polybuten-1, Polyisobuten, Polymethylbuten-1, Polymethylpenten-1, Polyisopren, Polybutadien, Polystyrol, Copolymere der den genannten Homopolymeren zugrundeliegenden Monomeren, wie Ethylen-Propylen-Copolymere, Propylen-Buten-1-Copolymere, Propylen-Isobuten-Copolymere, Styrol-Butadien-Copolymere sowie Terpolymere von Ethylen und Propylen mit einem Dien, wie z.B. Hexadien, Dicyclopentadien oder Ethylidennorbornen; Mischungen der obengenannten Homopolymeren, wie beispielsweise Gemische von Polypropylen und Polyisobutylen oder von Butadien-Acrylnitril-Copolymerisaten mit Styrol-Butadien-Copolymerisaten.

Halogenhaltige Vinylpolymere, wie Polyvinylchlorid, Polyvinylidenchlorid, Polyvinylfluorid, Polychloropren und Chlorkautschuke sowie Copolymere von Vinylchlorid und Vinylidenchlorid untereinander und mit anderen olefinisch ungesättigten Monomeren.

Polymere, die sich von α,β-ungesättigten Säuren und deren Derivaten ableiten, wie Polyacrylate und Polymethacrylate, Polyacrylamide und Polyacrylnitril sowie deren Copolymere untereinander und mit anderen Vinylverbindungen, wie Acrylnitril-Butadien-Styrol-, Acrylnitril-Styrol- und Acrylnitril-Styrol-Acrylester-Copolymerisate.

Polymere, die sich von ungesättigten Alkoholen und Aminen bzw. deren Acylderivaten oder Acetalen ableiten, wie Polyvinylalkohol, Polyvinylacetat, -stearat, -benzoat, -maleat, Polyvinylbutyral, Polyallylphthalat, Polyallylmelamin und deren Copolymere mit anderen Vinylverbindungen, wie Ethylen-Vinylacetat-Copolymere.

Homo- und Copolymere, die sich von Epoxiden ableiten, wie Polyethylenoxid, oder die Polymerisate, die auf Bisglycidylethern basieren.

Polyacetale, wie Polyoximethylen und Polyoxiethylen sowie solche Polyoximethylene, die als Comonomeres Ethylenoxid enthalten.

Polyurethane und Polyharnstoffe.

Polycarbonat, Polyamide und Copolyamide, die sich von Diaminen und Dicarbonsäuren und/oder von Aminocarbonsäuren oder den entsprechenden Lactamen ableiten, wie Polyamid 6, Polyamid 6/6, Polyamid 6/10, Polyamid 11, Polyamid 12.

Polyester, die aus Dicarbonsäuren und Dialkoholen und/oder Hydroxicarbonsäuren oder den entsprechenden Lactonen aufgebaut sind, wie Polyethylenterephthalat, Polybutylenterephthalat, Poly-1,4-dimethylol-cyclohexanterephthalat.

Vernetzte Polymerisate, die sich von Aldehyden einerseits und Phenolen, Harnstoffen und Melaminen andererseits ableiten, wie Phenol-Formaldehyd-, Harnstoff-Formaldehyd- und Melamin-Formaldehydharze.

Die neuen Verbindungen lassen sich schliesslich auch als Stabilisatoren auf dem Harz- und Lacksektor einsetzen. Beispiele sind duroplastische und thermoplastische Acrylharze, welche für Autolackierungen verwendet werden [Encyclopedia of Polymer Science and Technology, Interscience Publishers, New York, Band 1 (1964), Seiten 273–276, und Band 13 (1970), Seiten 530–532; «Understanding Paint» von W.R. Fuller, in American Paint Journal Co., St. Louis, 1965, Seiten 124–135], Acrylharzlacke, das sind die üblichen Einbrennlacke [beschrieben z.B. in H. Kittels «Lehrbuch der Lacke und Beschichtungen», Band 1, Teil 2, Seite 735 und 742 (Berlin, 1972), und in H. Wagner, H.F. Sarx «Lackkunstharze», Seiten 229–235] sowie ganz besonders Mischungen auf der Basis von heissvernetzbarem Acrylharz und Styrol sowie Lacke und Beschichtungen auf der Basis von Acryl/Melaminharz und Alkyd/Acryl/Melaminharz. Derartige Lacke können als weitere Zusatzstoffe andere übliche Lichtschutzmittel, phenolische Antioxidantien, Pigmente, Farbstoffe, Metalldesaktivatoren etc. enthalten.

Von besonderer Bedeutung ist die Stabilisierung von Polyolefinen, Styrolpolymerisaten, Polyamiden, Poly-(meth)-acrylaten und von Polyurethanen, für die sich die Verbindungen bevorzugt eignen. Beispiele hierfür sind Polyethylen hoher und niedriger Dichte, Polypropylen, Ethylen-Propylen-Copolymerisate, Polystyrol, Styrol-Butadien-Acrylnitril-Terpolymerisate; Mischungen von Polyolefinen oder von Styrolpolymerisaten sowie Polyurethane auf Polyether- oder Polyesterbasis.

Die neuen Stabilisatoren werden nach allgemein üblichen Methoden in die Polymermassen eingearbeitet. Die Einarbeitung kann beispielsweise durch Einmischen der Verbindungen und gegebenenfalls weitere Additive in die Schmelze nach den in der Technik üblichen Methoden, vor oder während der Formgebung, oder auch durch Aufbringen der gelösten oder dispergierten Verbindungen auf das Polymere direkt oder Einmischen in eine Lösung, Suspension oder Emulsion desselben, gegebenenfalls unter nachträglichem

Verdunstenlassen des Lösungsmittels erfolgen. Die Mengen liegen bei 0,01 bis 5, vorzugsweise 0,05 bis 2,5 und insbesondere bei 0,1 bis 1,0 Gew.-%, bezogen auf das zu stabilisierende Material. Die neuen Verbindungen können auch in Form eines Masterbatches, der diese Verbindungen beispielsweise in einer Konzentration von 1 bis 50, vorzugsweise 2,5 bis 20 Gew.-% enthält, den zu stabilisierenden Kunststoffen zugesetzt werden.

Die durch den Zusatz der erfindungsgemässen Substanzen stabilisierten Kunststoffe können gegebenenfalls noch andere bekannte und übliche Zusätze, wie beispielsweise Antioxidantien auf Phenol- und Sulfidbasis, Metalldosaktivatoren und Lichtschutzmittel, Phosphitstabilisatoren, Metallverbindungen, Epoxistabilisatoren und mehrwertige Alkohole enthalten (s. a. DE-OS 2 427 853, Seiten 18 bis 24).

Beispiele für Antioxidantien sind sterisch gehinderte Phenole wie
2,6-Di-tert.-butyl-4-methylphenol,
4,4′-Butyliden-bis-(2,6-di-tert.-butylphenol),
4,4′-Thio-bis-(2-tert.-butyl-5-methylphenol),
2,5-Di-tert.-butyl-4-hydroxianisol,
2,2-Bis-(3,5-di-tert.-butyl-2-hydroxibenzyl)-malonsäuredioctadecylester,
1,3,5-Tris-(3,5-ditert.-butyl-4-hydroxibenzyl)-2,4,6-trimethylbenzol,
2,4,6-Tri-(3,5-di-tert.-butyl-4-hydroxibenzyl)-phenol,
phenolische Triazinverbindungen wie 1,3,5-Tris-(3,5-di-tert.-butyl-4-hydroxibenzyl)-isocyanurat, Ester der β-(3,5-Di-tert.-butyl-4-hydroxiphenyl)-propionsäure mit z.B. Octadecanol, Pentaerythrit und Tris-hydroxiethyl-isocyanurat, Ester der 3,3 Bis-(3-tert.-butyl-4-hydroxiphenyl)-butansäure mit z.B. Ethylenglykol, Thiodipropionsäureester mit Fettalkoholen, Ca- oder Ni-Salze des 3,5-Di-tert. butyl-4-hydroxibenzylphosphorsäureethylesters, Dioctadecylsulfid und -disulfid.

Zu den UV-Absorbern und Lichtschutzmitteln gehören 2-(2′-Hydroxiphenyl)-benztriazole wie z.B. das 5-Chlor-3′,5′-di-tert.-butyl- und 5-Chlor-3′,5′-di-tert.-amyl-Derivat, 2-Hydroxibenzophenone wie z.B. das 4-Heptoxi- oder 4-Octoxi-Derivat, Salizylate wie Octyphenylsalizylat, Nickelkomplexe wie z.B. die des 2,2′-Thio-bis-4-(1,1,3,3-tetramethylbutyl)-phenols mit Butylamin oder anderen Aminen, Oxalsäurediamide und sterisch gehinderte Amine.

Als Phosphite sind aliphatische, aromatische oder aliphatisch-aromatische wie z.B. Trisnonylphenylphosphit, Tris-(2,4-di-tert.-butylphenyl)-phosphit, Tris-(2-tort-butylphenyl)-phosphit oder auch Ester des Pentaerythritphosphits zu nennen.

Unter als Stabilisatoren bekannten Metallverbindungen werden verstanden: Calcium-, Barium-, Strontium-, Zink-, Cadmium-, Magnesium-, Aluminium- und Bleiseifen aliphatischer Carbonsäure oder Oxicarbonsäure mit etwa 12 bis 32 C-Atomen,Salze der genannten Metalle mit aromatischen Carbonsäuren wie Benzoate oder Salizylate sowie (Alkyl)Phenolate dieser Metalle, ferner Organozinnverbindungen wie z.B. Dialkylzinnthioglykolate und -carboxilate.

Bekannte Epoxistabilisatoren sind z.B. epoxidierte höhere Fettsäuren wie epoxidiertes Sojabohnenöl, Tallöl, Leinöl oder epoxidiertes Butyloleat sowie Epoxide langkettiger Olefine.

Mehrwertige Alkohole können beispielsweise Pentaerythrit, Trimethylolpropan, Sorbit oder Mannit sein, d.h. bevorzugt Alkohole mit 5 oder 6 C-Atomen und 2 bis 6 OH-Gruppen.

Eine wirksame Stabilisatorkombination für Poly-α-Olefine, wie z.B. Hoch-, Mittel- und Niederdruckpolymerisate von $C_2$- bis $C_4$-α-Olefinen, insbesondere Polyethylen und Polypropylen oder von Copolymerisaten derartiger α-Olefine besteht, bezogen auf 100 Gewichtsteile Polymer, beispielsweise aus 0,01 bis 5 Gewichtsteilen einer der erfindungsgemäss zu verwendenden Verbindungen, 0,05 bis 5 Gewichtsteilen eines phenolischen Stabilisators, gegebenenfalls 0,01 bis 5 Gewichtsteilen eines schwefelhaltigen Costabilisators sowie gegebenenfalls 0,01 bis 3 Gewichtsteilen einer basischen oder neutralen Metallseife, wie z.B. Calciumstearat oder Zinkstearat oder der entsprechenden Oxide sowie gegebenenfalls 0,01 bis 5 Gewichtsteile eines bekannten UV-Stabilisators aus der Gruppe der Alkoxihydroxibenzophenone, 4-Hydroxiphenylbenzotriazole, Benzylidenmalonsäuremononitrilester oder der sog. Quencher, wie z.B. Nickelchelate. Als sonstige übliche Zusätze sind z.B. Weichmacher, Gleitmittel, Emulgatoren, Füllstoffe wie beispielsweise Kreide, Talkum, Asbest, Pigmente, optische Aufheller, Flammschutzmittel und Antistatika anzusehen.

Die erfindungsgemäss stabilisierten Kunststoffe können in verschiedenster Form angewendet werden, z.B. als Folien, Fasern, Bändchen, Profile oder als Bindemittel für Lacke, Klebemittel oder Kitte.

Die folgenden Beispiele dienen der weiteren Erläuterung der Erfindung:

Beispiele:

In den folgenden Herstellungsbeispielen sind die eingesetzten Ausgangsstoffe durch Ziffern gekennzeichnet, welche sich auf die Numerierung der auf den Seiten 9 bis 11 aufgelisteten Substanzen beziehen. Da es sich bei den Verfahrensprodukten um Harze handelt, sind die Angaben über die Schmelzpunkte «Ungefähr»-Werte. Ist nur «Harz» angegeben, so besitzt dieses Produkt die Konsistenz eines Weichharzes.

Beispiel 1

In einer Rührapparatur werden 200 ml Toluol und 100 ml Aceton vorgelegt und auf 10 °C abgekühlt. Nach Zugabe von 38,5 g (0,1 Mol) der Verbindung 11 (Edukt 1) werden 45,6 g (0,2 Mol) der Verbindung 15 (Edukt 2) zugetropft. Anschliessend wird auf 50 °C erhitzt und 32 g (0,2 Mol) 25%ige NaOH innerhalb von 2 h zugetropft. Es wird 4 h bei 50 °C nachgerührt, filtriert und die obere organische Phase des Filtrats abgetrennt, über $Na_2SO_4$ getrocknet und i. Vak. zur Trockene eingeengt. Der Rückstand wird im Hochvakuum getrocknet.

74 g farbloses Harz vom Fp 130 °C der Struktur

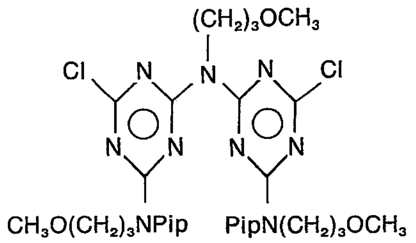

Pip =

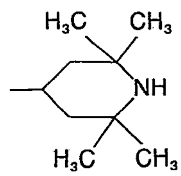

Analyse: Cl berechnet: 9,23% gefunden: 9,1%

Beispiele 2 bis 17

Es wurde analog Beispiel 1 gearbeitet unter Einsatz anderer Edukte.

| Bsp. Nr. | Ausgangsmaterialien Edukt 1 Verb.-Nr. (g ≙ Mol) | Edukt 2 Verb.-Nr. (g ≙ Mol) | Verfahrens-produkt Fp (°C) |
|---|---|---|---|
| 2 | 11 (38,5 ≙ 0,1) | 14 (81,6 ≙ 0,2) | Harz |
| 3 | 3 (36,9 ≙ 0,1) | 13 (42,4 ≙ 0,2) | dto. |
| 4 | 3 (36,9 ≙ 0,1) | 31 (36,2 ≙ 0,2) | ~ 207 |
| 5[1)] | 8 (39,5 ≙ 0,1) | 24 (19,8 ≙ 0,2) | ~ 230 |
| 6 | 4 (42,5 ≙ 0,1) | 36 (15,0 ≙ 0,2) | 91 |
| 7 | 4 (42,5 ≙ 0,1) | 13 (42,4 ≙ 0,2) | Harz |
| 8 | 5 (39,7 ≙ 0,1) | 37 (48,4 ≙ 0,2) | dto. |
| 9 | 3 ( 9,9 ≙ 0,025) | 33 (59,6 ≙ 0,05) | 104–13 |
| 10 | 1 (32,7 ≙ 0,1) | 13 (42,4 ≙ 0,2) | 126 |
| 11 | 1 (32,7 ≙ 0,1) | 12 (31,2 ≙ 0,2) | > 250 |
| 12 | 11 (38,5 ≙ 0,1) | 37 (48,4 ≙ 0,2) | Harz |
| 13 | 7 (56,6 ≙ 0,1) | 13 (42,4 ≙ 0,2) | dto. |
| 14[2)] | 9 (40,3 ≙ 0,1) | 16 (48,2 ≙ 0,2) | ~ 225 |
| 15[2)] | 9 (40,3 ≙ 0,1) | 26 (17,8 ≙ 0,2) | ~ 180 |
| 16[2)] | 4 (42,5 ≙ 0,1) | 16 (48,2 ≙ 0,2) | ~ 215 |
| 17 | 10 (45,8 ≙ 0,1) | 15 (45,4 ≙ 0,2) | ~ 95 |

1) Aceton als Lösungsmittel

2) Reaktionslösung wurde eingeengt, in Ethanol aufgenommen, filtriert und zur Trockene eingeengt.

Beispiel 18

In einer Rührapparatur werden 15,4 g (0,02 Mol) der nach Beispiel 1 erhaltenen Verbindung, 9,4 g (0,02 Mol) der Verbindung 62 (= Edukt 3) [+]) und 1,6 g (0,04 Mol) NaOH-Pulver in 100 ml Mesitylen 8 h bei Rückflusstemperatur gerührt. Es wird heiss filtriert und das Filtrat i. Vak. zur Trockene eingeengt. Der Rückstand wird im Hochvakuum bei 120 °C getrocknet. Man erhält 22,5 g eines hellen, festen Harzes vom Fp ~115 °C, welches nachstehende Struktur besitzt.

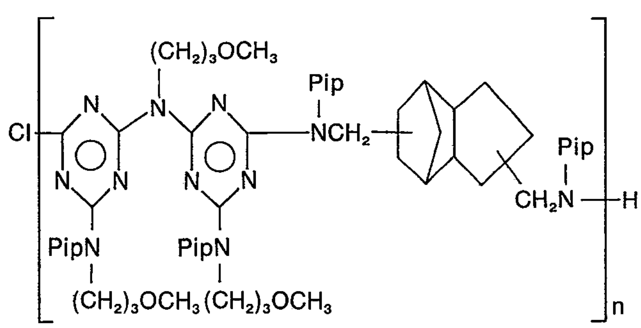

Pip =

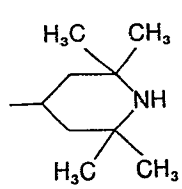

+) dies gilt auch für die nachfolgenden Beispiele

Beispiele 19 bis 38

Es wurde analog Beispiel 18 gearbeitet.

| Bsp. Nr. | Ausgangsmaterialien Verb. gem. Bsp. Nr. . . (g ≙ Mol) | Edukt 3 Verb.-Nr. (g ≙ Mol) | Verfahrens-produkt Fp (°C) |
|---|---|---|---|
| 19 | 3 (14,4 ≙ 0,02) | 40 ( 2,3 ≙ 0,02) | ~ 90 |
| 20[1)] | 2 (11,3 ≙ 0,01) | 63 ( 3,3 ≙ 0,01) | Harz |
| 21[1)] | 1 (15,4 ≙ 0,02) | 52 ( 3,0 ≙ 0,02) | dto. |
| 22[1)] | 4 (13,2 ≙ 0,02) | 60 ( 8,6 ≙ 0,02) | ~ 150 |
| 23[1)] | 1 (15,4 ≙ 0,02) | 56 ( 5,1 ≙ 0,02) | ~ 90 |
| 24[1)] | 3 (14,4 ≙ 0,02) | 55 ( 7,9 ≙ 0,02) | ~ 75 |
| 25 | 7 (13,8 ≙ 0,02) | 53 ( 3,6 ≙ 0,02) | ~ 115 |
| 26 | dto. | 59 ( 9,1 ≙ 0,02) | Harz |
| 27 | 1 (15,4 ≙ 0,02) | 48 ( 4,0 ≙ 0,02) | ~ 85 |
| 28[2)] | 3 (14,4 ≙ 0,02) | 41 ( 1,7 ≙ 0,02) | ~ 135 |
| 29 | 9 ( 7,1 ≙ 0,01) | 15 (18,2 ≙ 0,08) | ~ 90 |
| 30 | 5 (10,4 ≙ 0,02) | 54 ( 6,8 ≙ 0,02) | > 230 |
| 31 | 16 (16,7 ≙ 0,02) | 44 ( 4,0 ≙ 0,02) | Harz |
| 32[2)] | 15 (16,2 ≙ 0,02) | 38 ( 1,2 ≙ 0,02) | ~ 120 |
| 33[2)] | 3 (14,4 ≙ 0,02) | 45 ( 8,0 ≙ 0,02) | ~ 115 |
| 34[2)] | 16 (16,7 ≙ 0,02) | 56 ( 5,1 ≙ 0,02) | ~ 55 |
| 35[2)] | 6 (10,0 ≙ 0,02) | 57 ( 8,4 ≙ 0,02) | ~ 90 |
| 36[1)] | 5 (10,4 ≙ 0,02) | 62 ( 9,4 ≙ 0,02) | ~ 115 |
| 37 | 17 (14,0 ≙ 0,02) | 51 ( 3,9 ≙ 0,02) | ~ 105 |
| 38 | 8 (11,3 ≙ 0,02) | 62 ( 9,4 ≙ 0,02) | ~ 90 |

[1)] 20 h in Diothylbenzol Rückfluss, [2)] 20 h Xylol Rückfluss

Beispiel 39

Dieses Beispiel zeigt die Flüchtigkeit der neuen Triazinstabilisatoren im Vergleich zu Produkten des nächsten Standes der Technik.

Die Flüchtigkeiten wurden in einer Apparatur zur thermogravimetrischen Analyse bestimmt. Gleiche Menge (500 mg) der erfindungsgemässen Verbindungen und der Vergleichssubstanzen wurden dazu in Stickstoffatmosphäre mit einer Aufheizgeschwindigkeit von 2 K/min bis auf 300 °C erhitzt und der Substanzverlust in mg/cm² Probenoberfläche gemessen. Die Ergebnisse zeigt nachstehende Tabelle:

| Stabilisator gemäss Beisp. | Gewichtsverlust in mg/cm² beim Erreichen von . . .°C 220 | 260 | 300 | 10 min bei 300 °C |
|---|---|---|---|---|
| Vergleich [1)] | 0,16 | 1,11 | 9,48 | 58,46 |
| Vergleich [2)] | 0,16 | 2,05 | 4,42 | 5,21 |
| 17 | 0,32 | 2,37 | 3,63 | 4,90 |

[1)] Verbindung nach Bsp. 1 der DE-OS 27 19 131 (Handelsprodukt)

[2)] Verbindung nach Bsp. 14 der DE-OS 30 45 839

Beispiel 40

Dieses Beispiel soll die lichtstabilisierende Wirkung der neuen Verbindungen in einem Poly-α-Olefin aufzeigen.

100 Gewichtsteile Polypropylen mit dem Schmelzindex $i_5$ (230 °C) von ca. 6 g/10 min (bestimmt nach ASTM D 1238-62 T) und einer Dichte von 0,90 wurden mit

0,1 Gew.-T. Pentaerythrityl-tetrakis-3-(3,5-di-tert.-butyl-4-hydroxiphenyl)-propionat,

0,2 Gew.-T. Calciumstearat und

0,1 Gew.-T. des zu prüfenden erfindungsgemässen Stabilisators vermischt.

Um eine möglichst gleichmässige Verteilung auf dem Polymerkorn zu erreichen, wurden die Stabilisatoren in einem Lösemittel gelöst, und die Lösung wurde unter Rühren in das Polypropylenpulver eingetropft, wobei durch gleichzeitige Bestrahlung mit einer IR-Lampe der grösste Teil des Lösemittels wieder abdampfte. Nach ca. 20 min wurde das Calciumstearat hinzugegeben und noch weitere 10 min gemischt. Lösemittelreste wurden durch Trocknen bei 50 °C/120 min im Trokkenschrank entfernt.

Das Polypropylen wurde auf einer Windsor-Spritzgussmaschine der Type SP 50 bei 240 °C zu 60 × 60 × 1 mm-Platten verspritzt. Aus diesen Platten wurden Prüfkörper nach DIN 53 455, Form 3, verkleinert im Massstab 1:3, ausgestanzt. Die als Vergleichsmuster benötigten Prüfkörper wurden analog, jedoch unter Fortlassen des zu testenden Stabilisators bzw. unter Zusatz der Vergleichsstabilisatoren, hergestellt.

Zur Bestimmung der Lichtstabilität wurden die Proben in einer Xenotest-1200-Apparatur der Firma Original Hanau Quarzlampen GmbH der Bestrahlung mit Wechsellicht unterworfen. Die Strahlungsintensität wurde durch UV-Filter (Spezialfilterglas d = 1,7 mm) moduliert. Die Lichtbeständigkeit wurde nach DIN 53 387 (17 min Trockenperiode, 3 min beregnen, Schwarztafeltemperatur 45 °C, relative Luftfeuchtigkeit während der Trokkenperiode 70 bis 75%) geprüft. Gemessen wurde die Reissdehnung nach bestimmten Belichtungszeiten in h auf einer Zugprüfmaschine der Firma Instron bei einer Abzugsgeschwindigkeit von 5 cm/min.

| Stabilisator nach Beispiel | Belichtungszeit in Stunden | ermittelte Reissdehnung in % vom Ausgangswert |
|---|---|---|
| Polypropylen | 260 | 1 |
| Vergleich [1] | 600 | 1 |
| Verlgeich [2] | 1 400 | > 50 |
| Vergleich [3] | 320 | 1 |
| 17 | 1 400 | > 50 |

[1] Verbindung nach Beispiel 1 der DE-OS 27 19 131 (Handelsprodukt)
[2] Verbindung nach Beispiel 14 der DE-OS 30 45 839
[3] ohne erfindungsgemässen Stabilisator

Beispiel 41

In Polypropylen (® Hostalen PPU VP 1770 F der Hoechst AG) vom Schmelzindex MFI 190/5 = 1,9 g/10 min s. DIN 53 535 werden die unten angegebenen Rezepturbestandteile über einen Laborschnellmischer eingemischt. Die Mischung wird zu Granulat verarbeitet, welches man in einem Laborextruder unter den üblichen Verarbeitungsbedingungen schmilzt und über eine Spinnpumpe mit Achtfachspinnkopf zu Monofilamenten spinnt, welche anschliessend im Verhältnis 1:3 nachverstreckt, zu Garn von 40dtex texturiert und zu Prüfgeweben verwebt werden.

100 Gew.-T. Polypropylen,
0,2 Gew.-T. Calciumstearat,
0,1 Gew.-T. 3,3-Bis-(3-tert.-butyl-4-hydroxiphenyl)-butan-säureethylenglykolester,
0,1 Gew.-T. Dioctadecyldisulfid,
0,3 Gew.-T. des zu prüfenden Stabilisators.

Die Gewebeproben werden auf einen gelochten Karton so aufgespannt, dass eine freie Öffnung von ca. 15,5 mm Durchmesser bestehen bleibt. In dieser Form werden die Prüflinge im Xenotest X 1200 wie im vorhergehenden Beispiel beschrieben belichtet. In bestimmten Zeitabständen werden die Gewebe zentrisch mit einem Gewicht von 6 mm Durchmesser und einem Druck von 0,1 N/$mm^2$ belastet. Als Versagenstermin gilt das Durchbrechen des Gewichtes.

| Stabilisator nach Beispiel | Belichtungszeit in h |
|---|---|
| Polypropylen | < 280 |
| Vergleich [1] | 1 400 |
| Vergleich [2] | > 3 100[+] |
| Vergleich [3] | 400 |
| 17 | > 3 100[+] |

[1] Verbindung nach Beispiel 1 der DE-OS 27 19 131 (Handelsprodukt)
[2] Verbindung nach Beispiel 14 der DE-OS 30 45 839
[3] ohne Stabilisator
[+] Gewicht noch nicht durchgebrochen

Beispiel 42

Das wie im vorhergehenden Beispiel hergestellte stabilisierte Granulat wird auf einer Labor-Folienblasanlage (Schneckendurchmesser 25 mm, Länge 20 D), Temperaturprogramm 200, 240, 250, 255 °C) zu Blasfolien von ca. 70 µm Dichte verarbeitet. Diese Folien werden im Xenotest X. 1200 wie in Beispiel 52 beschrieben künstlich bewittert. Als Schädigungsmerkmal wird die Carbonylzahl in Anlehnung an DIN 63 383, Teil 2, gemessen (Diese wird für PP definiert als Verhältnis der Extinktionen bei 1715 $cm^{-1}$ und 1524 $cm^{-1}$). Bei einer CO-Zahl >2 beginnt der Zerfall der Prüfkörper zu Pulver.

| Stabilisator nach Beispiel | C=O−Zahl nach ... Stunden 500 | 1000 | 2000 | 2500 |
|---|---|---|---|---|
| Polypropylen | >2 | | | |
| Vergleich [1)] | | >2 | | |
| Vergleich [2)] | <0,1 | 0,1 | 0,3 | 0,5 |
| Vergleich [3)] | >2 | | | |
| 17 | <0,1 | <0,1 | 0,2 | 0,4 |

[1), 2), 3)] entsprechen den Vergleichsproben des Beispiels 4.1.

**Patentansprüche für die Vertragsstaaten BE CH DE FR GB IT LI NL SE**

1. Poly-bis-triazinylimide der allgemeinen Formel (I),

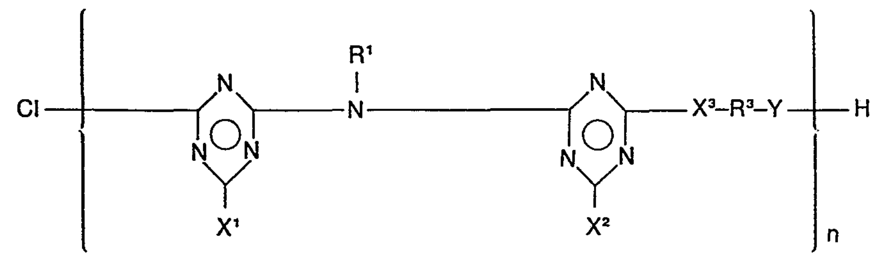
(I),

in welcher

n eine ganze Zahl von 2 bis 10 ist,

$X^1$ und $X^2$ gleich oder verschieden sind und die Bedeutung von −Cl, Phenyl, −OH, −ONa oder einer Gruppe der Formel (II), (III), (IV) oder (V) haben,

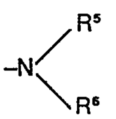
(II),

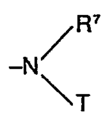
(III),

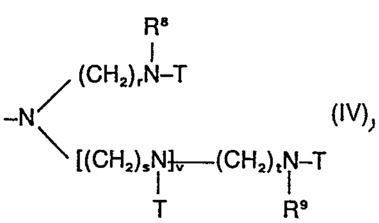
(IV), $-OR^{10}$ (V),

wobei in diesen Formeln

$R^5$ Wasserstoff oder $C_1$- bis $C_{18}$-Alkyl oder $C_5$- bis $C_{12}$-Cycloalkyl, das durch eine $C_1$- bis $C_4$-Alkylgruppe substituiert sein kann, oder $C_3$- bis $C_{12}$-Alkenyl, oder Phenyl, das durch ein oder zwei Cl, oder durch eine oder zwei $C_1$- bis $C_4$-Alkylgruppen, oder durch $C_1$- bis $C_4$-Alkoxi, oder durch $C_1$- oder $C_2$-Carbalkoxi substituiert sein kann, oder $C_7$-bis $C_{14}$-Phenylalkyl, oder eine Gruppe der Formel (VI) ist,

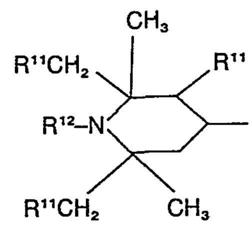
(VI)

und in Formel (VI) dann

$R^{11}$ Wasserstoff oder Methyl und

$R^{12}$ Wasserstoff, $C_1$- bis $C_4$-Alkyl, das durch ein oder zwei OH-Gruppen substituiert sein kann, 2,3-Epoxipropyl, Allyl oder Benzyl bedeutet,

$R^6$ die bei $R^5$ angegebenen Bedeutungen sowie zusätzlich die von $C_1$- bis $C_{18}$-Hydroxialkyl, $C_3$- bis $C_{21}$-Alkoxialkyl oder Dimethyl- oder Diothylamino-$C_2$- bis $C_5$-alkyl hat, und gleich oder ungleich $R^5$ sein kann, oder

$R^5$ und $R^6$ zusammen mit dem sie bindenden N-Atom für einen Pyrrolidin-, einen unsubstituierten oder durch bis zu zwei $C_1$- bis $C_4$-Alkylgruppen substituierten Piperidin-, Morpholin- oder Hexamethyleniminring stehen,

$R^7$ die unter $R^6$ angegebenen Bedeutungen hat, und

T eine Gruppe der Formel (VII)

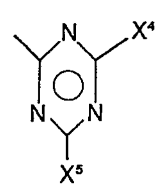
(VII),

mit

$X^4$ und $X^5$ = gleichen oder verschiedenen Resten der Formel (II), (IV) oder (V) sein soll,

r, s und t gleiche oder unterschiedliche ganze Zahlen von 2 bis 6 bedeuten,

v eine ganze Zahl von 0 bis 3 ist,

$R^8$ und $R^9$ gleiche oder verschiedene Reste mit der Bedeutung von $R^5$ darstellen und

$R^{10}$ ebenfalls für die unter $R^5$ aufgeführten Reste steht,

$R^1$ gleichbedeutend mit $R^6$ oder T ist,

$X^3$ den Rest $-NR^{13}-$ mit $R^{13}$ = einer der unter $R^5$ angeführten Reste bedeutet,

Y für die Gruppe $-NR^{14}-$ mit $R^{14}$ = gleiche oder verschiedene Reste $R^5$ steht,

$R^3$ für $C_2$- bis $C_{18}$-Alkylen, für $C_2$- bis $C_{12}$-Bis-(propyloxi)-alkylen, für unsubstituiertes oder durch bis zu vier Methylgruppen substituiertes Mono-, Di-oder Tricycloalkylen, in welchem bei dem erstgenannten zwei C-Atome durch N-Atome, welche Propylengruppen tragen können, ersetzt sein können, für $C_6$- bis $C_{18}$-Arylen, oder für $C_7$- bis $C_{18}$-Aralkylen steht,

oder auch an Stelle der Gruppierung $-X^3-R^3-Y-$ Piperazinylenreste, oder bicyclische Reste mit 5 bis 12 C-Atomen, die im Ring ein N-Atom tragen und durch eine Amino- und/oder eine Aminomethylengruppe substituiert sind, treten können,

und in der Formel (I) mindestens einer der Reste $X^1$, $X^2$, $X^3$, Y, oder $R^1$ eine Gruppe der Formel (VI) enthalten muss, und die Verbindungen der Formel (I) bei gleichem $X^3$ und Y isotaktisch, bei verschiedenem ataktisch aufgebaut sind.

2. Verfahren zur Herstellung der Poly-bis-triazinylimide der Formel (I) in Anspruch 1, dadurch gekennzeichnet, dass man zunächst

A) ein durch Chloratome substituiertes Bis-triazinylimid mit der Teilstruktur (A)

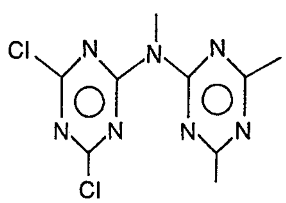

(A)

zur Substitution von je einem der in den vorhandenen Dichlortriazinylringen enthaltenen Chloratome mit der 0,95-bis 1,05fach valenten Menge einer Verbindung der Formel (II), (IV) oder (V), deren freie Valenz durch H abgesättigt ist, oder eines Gemisches derartiger Verbindungen bei 10 bis 70 °C umsetzt und anschliessend

B) zur Gewinnung polymerer Bis-triazinylimide ein Bis-triazinylimid der Teilstruktur (B)

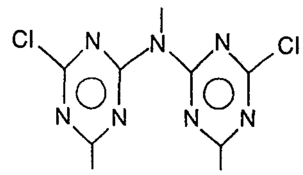

(B)

mit der 0,8- bis 1,2fach molaren Menge eines Diamins der Formel (C)

$$H-X^3-R^3-Y-H \qquad (C),$$

worin $X^3$ und Y die in Anspruch 1 angegebene Bedeutung haben, bei 50 bis 200 °C zur Reaktion bringt,

wobei man bei allen Varianten bzw. Verfahrensstufen in inerten organischen Lösungsmitteln und bei Anwesenheit äquivalenter Mengen einer anorganischen Base als Halogenwasserstoffacceptor arbeitet und die einzelnen Reaktionsschritte auch ohne Isolierung der Zwischenprodukte durchführen kann.

3. Verwendung der Poly-bis-triazinylimide nach Anspruch 1 zum Stabilisieren von synthetischen Polymeren.

4. Verwendung nach Anspruch 3, dadurch gekennzeichnet, dass die Polymeren Polyolefine sind.

5. Verwendung nach Anspruch 3, dadurch gekennzeichnet, dass die Polymeren halogenhaltige Polymere, Polyacrylate oder Polymethacrylate oder Homo-oder Copolymere des Styrols sind.

6. Verfahren zum Stabilisieren von synthetischen Polymeren gegen den schädigenden Einfluss von Licht, dadurch gekennzeichnet, dass man den Polymeren, gegebenenfalls neben bekannten, stabilisierend wirkenden Stoffen, 0,01 bis 5 Gewichtsteile, bezogen auf Polymeres, einer Verbindung nach Anspruch 1 zusetzt.

7. Gegen UV-Zersetzung stabilisierte, synthetische Polymere, in denen als Stabilisator 0,01 bis 5 Gewichtsteile, bezogen auf Polymeres, einer Verbindung nach Anspruch 1 enthalten sind.

**Patentansprüche für den Vertragsstaat AT**

1. Verfahren zur Herstellung von Poly-bis-triazinylimiden der allgemeinen Formel (I),

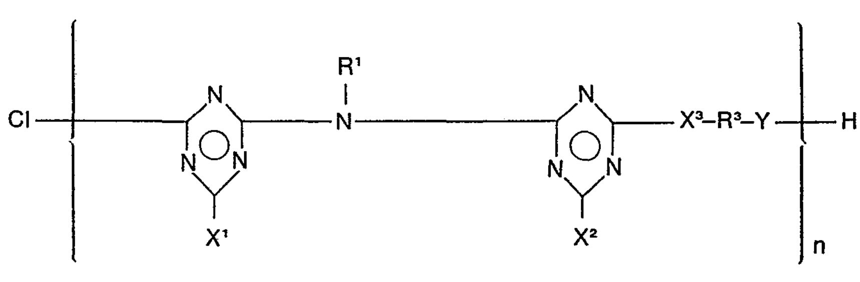

(I),

in welcher

n eine ganze Zahl von 2 bis 10 ist,

$X^1$ und $X^2$ gleich oder verschieden sind und die Bedeutung von –Cl, Phenyl, –OH, –ONa oder einer Gruppe der Formel (II), (III), (IV) oder (V) haben,

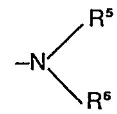
(II),

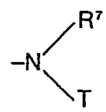
(III),

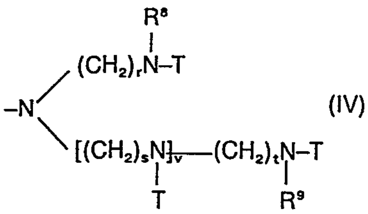
(IV), $-OR^{10}$ (V),

wobei in diesen Formeln

$R^5$ Wasserstoff oder $C_1$- bis $C_{18}$-Alkyl oder $C_5$- bis $C_{12}$-Cycloalkyl, das durch eine $C_1$- bis $C_4$-Alkylgruppe substituiert sein kann, oder $C_3$- bis $C_{12}$-Alkenyl, oder Phenyl, das durch ein oder zwei Cl, oder durch eine oder zwei $C_1$- bis $C_4$-Alkylgruppen, oder durch $C_1$- bis $C_4$-Alkoxi, oder durch $C_1$- oder $C_2$-Carbalkoxi substituiert sein kann, oder $C_7$- bis $C_{14}$-Phenylalkyl, oder eine Gruppe der Formel (VI) ist,

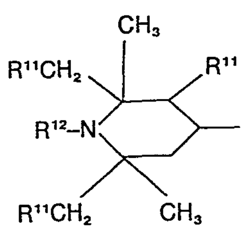
(VI),

und in Formel (VI) dann

$R^{11}$ Wasserstoff oder Methyl und

$R^{12}$ Wasserstoff, $C_1$- bis $C_4$-Alkyl, das durch ein oder zwei OH-Gruppen substituiert sein kann, 2,3-Epoxipropyl, Allyl oder Benzyl bedeutet,

$R^6$ die bei $R^5$ angegebenen Bedeutungen sowie zusätzlich die von $C_1$- bis $C_{18}$-Hydroxialkyl, $C_3$- bis $C_{21}$-Alkoxialkyl oder Dimethyl- oder Diethylamino-$C_2$-bis $C_5$-alkyl hat, und gleich oder ungleich $R^5$ sein kann, oder

$R^5$ und $R^6$ zusammen mit dem sie bindenden N-Atom für einen Pyrrolidin-, einen unsubstituierten oder durch bis zu zwei $C_1$- bis $C_4$-Alkylgruppen substituierten Piperidin-, Morpholin- oder Hexamethyleniminring steht,

$R^7$ die unter $R^6$ angegebenen Bedeutungen hat, und

T eine Gruppe der Formel (VII)

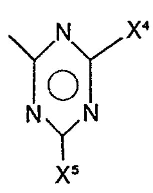
(VII)

mit

$X^4$ und $X^5$ = gleichen oder verschiedenen Resten der Formel (II), (IV) oder (V) sein soll,

r, s und t gleiche oder unterschiedliche ganze Zahlen von 2 bis 6 bedeuten,

v eine ganze Zahl von 0 bis 3 ist,

$R^8$ und $R^9$ gleiche oder verschiedene Reste mit der Bedeutung von $R^5$ darstellen und

$R^{10}$ ebenfalls für die unter $R^5$ aufgeführten Reste steht,

$R^1$ gleichbedeutend mit $R^6$ oder T ist,

$X^3$ den Rest $-NR^{13}-$ mit $R^{13}$ = einer der unter $R^5$ angeführten Reste

Y für die Gruppe $-NR^{14}-$ mit $R^{14}$ = gleiche oder verschiedene Reste $R^5$ steht,

$R^3$ für $C_2$- bis $C_{18}$-Alkylen, für $C_2$- bis $C_{12}$-Bis-(propylenoxi)-alkylen, für unsubstituiertes oder durch bis zu vier Methylgruppen substituiertes Mono-, Di-oder Tricycloalkylen, in welchem bei dem erstgenannten zwei C-Atome durch N-Atome, welche Propylengruppen tragen können, ersetzt sein können, für $C_6$- bis $C_{18}$-Arylen, oder für $C_7$- bis $C_{18}$-Aralkylen steht,

oder auch an Stelle der Gruppierung $-X^3-R^3-Y-$Piperazinylenreste, oder bicyclische Reste mit 5 bis 12 C-Atomen, die im Ring ein N-Atom tragen und durch eine Amino-und/oder eine Aminomethylengruppe substituiert sind, treten können,

und in der Formel (I) mindestens einer der Reste $X^1$, $X^2$, $X^3$, Y, oder $R^1$ eine Gruppe der Formel (VI) enthalten muss, und die Verbindungen der Formel (I) bei gleichem $X^3$ und Y isotaktisch, bei verschiedenem ataktisch aufgebaut sind, dadurch gekennzeichnet, dass man

A) ein durch Chloratome substituiertes Bis-triazinylimid mit der Teilstruktur (A)

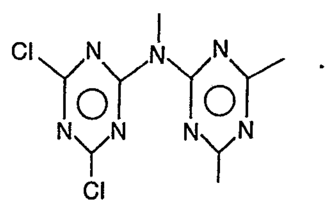
(A)

zur Substitution von je einem der in den vorhandenen Dichlortriazinylringen enthaltenen Chloratome mit der 0,95- bis 1,05fach valenten Menge einer Verbindung der Formel (II), (IV) oder (V), deren freie Valenz durch H abgesättigt ist, oder eines Gemisches derartiger Verbindungen bei 10 bis 70 °C umsetzt und anschliessend

B) zur Gewinnung polymerer Bis-triazinylimido ein Bis-triazinylimid der Teilstruktur (B)

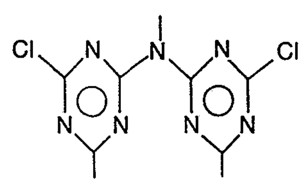
(B)

mit der 0,8- bis 1,2fach molaren Menge eines Diamins der Formel (C)

$$H-X^3-R^3-Y-H \qquad (C),$$

worin $X^3$ und Y die in Anspruch 1 angegebene Bedeutung haben, bei 50 bis 200 °C zur Reaktion bringt,
wobei man bei allen Varianten bzw. Verfahrensstufen in inerten organischen Lösungsmitteln und bei Anwesenheit äquivalenter Mengen einer anorganischen Base als Halogenwasserstoffacceptor arbeitet und die einzelnen Reaktionsschritte auch ohne Isolierung der Zwischenprodukte durchführen kann.

2. Verwendung der nach Anspruch 1 hergestellten Verbindungen zum Stabilisieren von synthetischen Polymeren.

3. Verwendung nach Anspruch 2, dadurch gekennzeichnet, dass die Polymeren Polyolefine sind.

4. Verwendung nach Anspruch 2, dadurch gekennzeichnet, dass die Polymeren halogenhaltige Polymere, Polyacrylate oder Polymethacrylate oder Homo-oder Copolymere des Styrols sind.

5. Verfahren zum Stabilisieren von synthetischen Polymeren gegen den schädigenden Einfluss von Licht, dadurch gekennzeichnet, dass man den Polymeren, gegebenenfalls neben bekannten, stabilisierend wirkenden Stoffen, 0,01 bis 5 Gewichtsteile, bezogen auf Polymeres, einer nach Anspruch 1 erhaltenen Verbindung zusetzt.

6. Gegen UV-Zersetzung stabilisierte, synthetische Polymere, in denen als Stabilisator 0,01 bis 5 Gewichtsteile, bezogen auf Polymeres, einer nach Anspruch 1 hergestellten Verbindung enthalten sind.

**Claims for the Contracting states: BE, CH, DE, FR, GB, IT, LI, NL, SE**

1. A poly-bis-triazinylimide of the general formula (I),

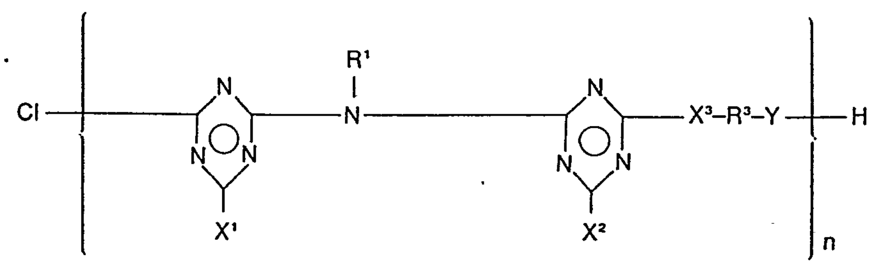

(I)

in which n is an integer from 2 to 10, $X^1$ and $X^2$ are identical or different and denote –Cl, phenyl, –OH, –ONa or a group of the formula (II), (III), (IV) or (V)

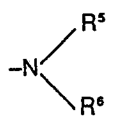

(II),

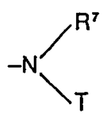

(III),

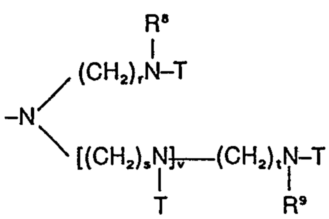

(IV), $-OR^{10}$ (V),

in which formulae $R^5$ is hydrogen or $C_1$- to $C_{18}$-alkyl or $C_5$- to $C_{12}$-cycloalkyl which can be substituted by a $C_1$- to $C_4$-alkyl group, or is $C_3$- to $C_{12}$-alkenyl, or phenyl which can be substituted by one or two C1 atoms or by one or two $C_1$- to $C_4$-alkyl groups or by $C_1$- to $C_4$-alkoxy or by $C_1$- or $C_2$-carbalkoxy, or is $C_7$- to $C_{14}$-phenylalkyl, or is a group of the formula (VI)

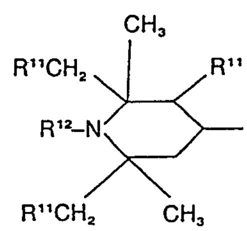

(VI)

and, in formula (VI), $R^{11}$ then denotes hydrogen or methyl and $R^{12}$ denotes hydrogen or $C_1$- to $C_4$-alkyl which can be substituted by one or two OH groups, or denotes 2,3-epoxypropyl, allyl or benzyl, $R^6$ has the meanings indicated for $R^5$ and, additionally, denotes $C_1$- to $C_{18}$-hydroxyalkyl, $C_3$- to $C_{21}$-alkoxyalkyl or dimethylamino-$C_2$- to $C_5$-alkyl or diethylamino-$C_2$-to $C_5$-alkyl and can be the same as $R^5$ or different, or $R^5$ and $R^6$, together with the N atom linking them, represent a pyrrolidine ring or a piperidine, morpholine or hexamethyleneimine ring which is unsubstituted or substituted by up to two $C_1$- to $C_4$-alkyl groups, $R^7$ has the meanings indicated under $R^6$ and T should be a group of the formula (VII)

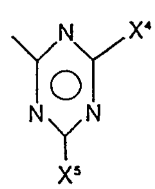

(VII)

in which $X^4$ and $X^5$ are identical or different radicals of the formula (II), (IV) or (V), r, s and t denote identical or different integers from 2 to 6, v is an integer from 0 to 3, $R^8$ and $R^9$ represent identical or different radicals having the same meaning as $R^5$, and $R^{10}$ also represents the radicals listed under $R^5$, $R^1$ is equivalent to $R^6$ or T, $X^3$ is the radical $-NR^{13}-$ in which $R^{13}$ is one of the radicals listed under $R^5$, Y represents the group $-NR^{14}-$ in which $R^{14}$ represents identical or different radicals $R^5$, $R^3$ represents $C_2$- to $C_{18}$-alkylene, $C_2$- to $C_{12}$-bis-(propoxy)-alkylene or monocycloalkylene, dicycloalkylene or tricycloalkylene which is unsubstituted or substituted by up to four methyl groups and in which, in the case first mentioned, two C atoms can be replaced by N atoms which can be substituted by propylene groups, or represent $C_6$- to $C_{18}$-arylene or $C_7$- to $C_{18}$-aralkylene, or piperazinylene radicals or bicyclic radicals which have 5 to 12 C atoms, and carry one N atom in the ring and are substituted by an amino group and/or an aminomethylene group can be present instead of the grouping

$$-X^3-R^3-Y-,$$

and, in the formula (I), at least one of the radicals $X^1$, $X^2$, $X^3$, Y or $R^1$ must contain a group of the formula (VI) and, furthermore the compounds of the formula (I) have an isotactic structure if $X^3$ and Y are identical or have an atactic structure if $X^3$ and Y are different.

2. A process for the preparation of a poly-bis-triazinylimide of the formula (I) in claim 1, which comprises firstly,

A) reacting a bis-triazinylimide which has the partial structure (A)

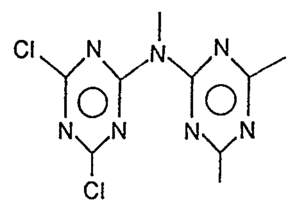

(A)

and is substituted by chlorine atoms, at 10 to 70 °C with a 0.95 to 1.05 times equivalent quantity of a compound of the formula (II), (IV) or (V) in which the free valence is saturated by H, or a mixture of such compounds, in order to effect the replacement of one of the chlorine atoms contained in each of the dichlorotriazinyl rings present, and then

B) reacting a bis-triazinylimide of the partial structure (B)

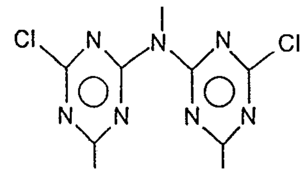

(B)

at 50 to 200 °C with a 0.8-molar to 1.2-molar quantity of a diamine of the formula (C)

$$H-X^3-R^3-Y-H \quad (C)$$

in which $X^3$ and Y have the meaning which is indicated in claim 1, in order to obtain polymeric bis-triazinylimides, the reactions being carried out, in the case of all the variants or process stages, in inert organic solvents and in the presence of equivalent quantities of an inorganic base as a hydrogen halide acceptor, and it being also possible to carry out the individual reaction steps without isolating the intermediate products.

3. Use of a poly-bis-triazinylimide as claimed in claim 1 for stabilizing synthetic polymers.

4. Use as claimed in claim 3, wherein the polymers are polyolefins.

5. Use as claimed in claim 3, wherein the polymers are halogen-containing polymers, polyacrylates or polymethacrylates or homopolymers or copolymers of styrene.

6. A process for stabilizing synthetic polymers against the harmful effects of light, wherein 0.01 to 5 parts by weight, relative to the polymer, of a compound as claimed in claim 1 are added to the polymers, if appropriate in addition to known substances having a stabilizing action.

7. Synthetic polymers which have been stabilized against decomposition by UV and in which 0.01 to 5 parts by weight, relative to the polymer, of a compound as claimed in claim 1 are present as the stabilizer.

**Claims for the Contracting state: Austria**

1. A process for the preparation of a poly-bis-triazinylimide of the general formula (I),

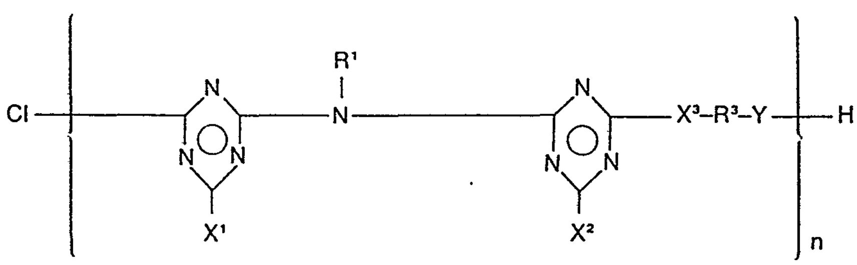

(I)

in which n is an integer from 2 to 10, $X^1$ and $X^2$ are identical or different and denote –Cl, phenyl, –OH, ONa or a group of the formula (II), (III), (IV) or (V)

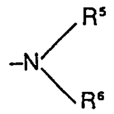 (II), 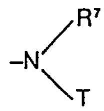 (III),

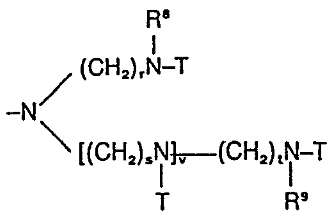 (IV), $-OR^{10}$ (V),

in which formulae $R^5$ is hydrogen or $C_1$- to $C_{18}$-alkyl or $C_5$- to $C_{12}$-cycloalkyl which can be substituted by a $C_1$- to $C_4$-alkyl group, or is $C_3$- to $C_{12}$-alkenyl, or phenyl which can be substituted by one or two Cl atoms or by one or two $C_1$- to $C_4$-alkyl groups or by $C_1$- to $C_4$-alkoxy or by $C_1$- or $C_2$-carboalkoxy, or is $C_7$- to $C_{14}$-phenylalkyl, or is a group of the formula (VI)

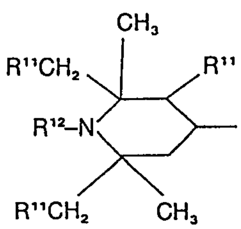 (VI)

and, in formula (VI), $R^{11}$ then denotes hydrogen or methyl and $R^{12}$ denotes hydrogen or $C_1$- to $C_4$-alkyl which can be substituted by one or two OH groups, or denotes 2,3-epoxypropyl, allyl or benzyl, $R^6$ has the meanings indicated for $R^5$ and, additionally, denotes $C_1$- to $C_{18}$-hydroxyalkyl, $C_3$- to $C_{21}$-alkoxyalkyl or dimethylamino-$C_2$- to $C_5$-alkyl or diethylamino-$C_2$to $C_5$-alkyl and can be the same as $R^5$ or different, or $R^5$ and $R^6$ together with the N atom linking them, represent a pyrrolidine ring or a piperidine, morpholine or hexamethyleneimine ring which is unsubstituted or substituted by up to two $C_1$- to $C_4$-alkyl groups, $R^7$ has the meanings indicated under $R^6$ and T should be a group of the formula (VII)

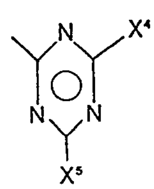 (VII)

in which $X^4$ and $X^5$ are identical or different radicals of the formula (II), (IV) or (V), r, s and t denote identical or different integers from 2 to 6, v is an integer from 0 to 3, $R^8$ and $R^9$ represent identical or different radicals having the same meaning as $R^5$, and $R^{10}$ also represents the radicals listed under $R^5$, $R^1$ is equivalent to $R^6$ or T, $X^3$ is the radical $-NR^{13}-$ in which $R^{13}$ is one of the radicals listed under $R^5$, Y represents the group $-NR^{14}-$ in which $R^{14}$ represents identical or different radicals $R^5$, $R^3$ represents $C_2$- to $C_{18}$-alkylene, $C_2$- to $C_{12}$-bis-(propoxy)-alkylene or monocycloalkylene, dicycloalkylene or tricycloalkylene which is unsubstituted or substituted by up to four methyl groups and in which, in the case first mentioned two C atoms can be replaced by N atoms which can be substituted by propylene groups, or represent $C_6$- to $C_{18}$-arylene or $C_7$- to $C_{18}$-aralkylene, or piperazinylene radicals or bicyclic radicals which have 3 to 12 C atoms, and carry one N atom in the ring and are substituted by an amino group and/or aminomethylene group can be present instead of the grouping

$$-X^3-R^3-Y-$$

and, in the formula (I), at least one of the radicals $X^1$, $X^2$, $X^3$, Y or $R^1$ must contain a group of the formula (VI) and, furthermore, the compounds of the formula (I) have an isotactic structure if $X^3$ and Y are identical or have an atactic structure if $X^3$ and Y are different, which comprises, firstly

A) reacting a bis-triazinylimide which has the partial structure (A)

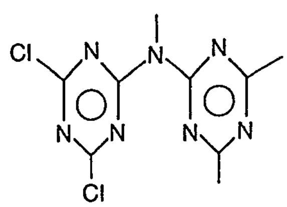 (A)

and is substituted by chlorine atoms, at 10 to 70 °C with a 0.95 to 1.05 times equivalent quantity of a compound of the formula (II), (IV) or (V) in which the free valence is saturated by H, or a mixture of such compounds, in order to effect the replacement of one of the chlorine atoms contained in each of the dichlorotriazinyl rings present, and then

B) reacting a bis-triazinylimide of the partial structure

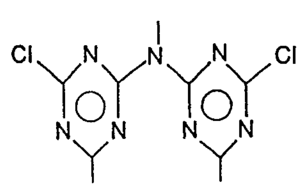 (B)

at 50 to 200 °C with a 0.8-molar to 1.2-molar quantity of a diamine of the formula (C)

$$H-X^3-R^3-Y-H \qquad (C)$$

in which $X^3$ and Y have the meaning which is indicated above, in order to obtain polymeric bis-triazinylimides, the reactions being carried out, in the case of all the variants or process stages, in

inert organic solvents and in the presence of equivalent quantities of an inorganic base as a hydrogen halide acceptor, and it being also possible to carry out the individual reaction steps without isolating the intermediate products.

2. Use of a poly-bis-triazinylimide as claimed in claim 1 for stabilizing synthetic polymers.

3. Use as claimed in claim 2, wherein the polymers are polyolefins.

4. Use as claimed in claim 2, wherein the polymers are halogen-containing polymers, polyacrylates or polymethacrylates or homopolymers or copolymers of styrene.

5. A process for stabilizing synthetic polymers against the harmful effects of light, wherein 0.01 to 5 parts by weight, relative to the polymer, of a compound as claimed in claim 1 are added to the polymers, if appropriate in addition to known substances having a stabilizing action.

6. Synthetic polymers which have been stabilized against decomposition by UV and in which 0.01 to 5 parts by weight relative to the polymer, of a compound as claimed in claim 1 are present as the stabilizer.

**Revendications pour les Etats contractants: BE, CH, DE, FR, GB, IT, LI, NL, SE**

1. Poly-(bis-triazinylimides) répondant à la formule générale I:

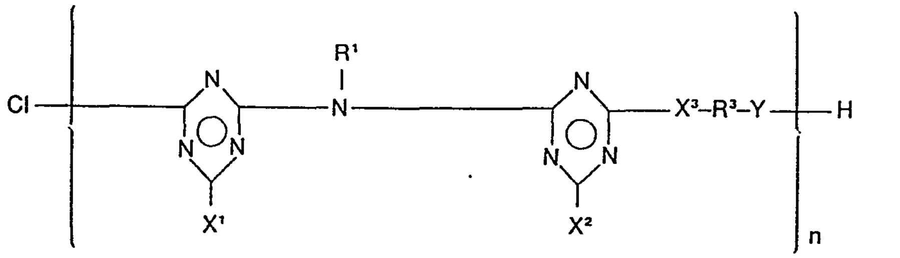

(I)

dans laquelle

n représente un nombre entier de 2 à 10,

$X^1$ et $X^2$ sont identiques ou différents et représentent chacun –Cl, phényle, –OH, –ONa ou un radical répondant à l'une des formules II, III, IV et V:

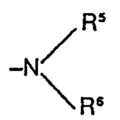

(II),

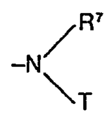

(III),

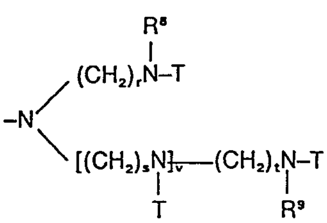

(IV), $-OR^{10}$ (V),

formules dans lesquelles

$R^5$ représente l'hydrogène, ou un alkyle en $C_1$–$C_{18}$, ou un cycloalkyle en $C_5$–$C_{12}$ éventuellement porteur d'un alkyle en $C_1$–$C_4$, ou un alcényle en $C_3$–$C_{12}$, ou un phényle éventuellement porteur d'un ou de deux Cl ou d'un ou de deux radicaux alkyles en $C_1$–$C_4$ ou d'un alcoxy en $C_1$–$C_4$ ou d'un alcoxycarbonyle dont la partie alcoxy contient un ou deux atomes de carbone, ou un phénylalkyle en $C_7$–$C_{14}$, ou un radical de formule VI:

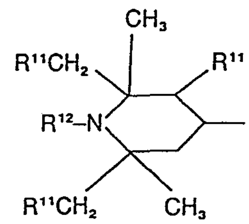

(VI)

dans lequel:

$R^{11}$ représente l'hydrogène ou un méthyle et

$R^{12}$ représente l'hydrogène, un alkyle en $C_1$–$C_4$ éventuellement porteur d'un ou de deux radicaux –OH, un époxy-2,3 propyle, un allyle ou un benzyle,

$R^6$ a les significations données pour $R^5$ et peut en outre représenter un radical hydroxy-alkyle en $C_1$–$C_{18}$, un radical ($C_3$–$C_{21}$)-alcoxy-alkyle ou un radical diméthylamino-alkyle ou diéthylamino-alkyle dont l'alkyle contient de 2 à 5 atomes de carbone, $R^6$ pouvant être identique à $R^5$ ou différent de lui, ou

$R^5$ et $R^6$ forment ensemble, et avec l'atome d'azote qui les unit, un cycle de pyrrolidine ou un cycle de pipéridine, de morpholine ou de perhydro-azépine non substitué ou porteur d'un ou deux radicaux alkyles en $C_1$–$C_4$,

$R^7$ a les significations indiquées pour $R^6$ et

T représente un radical de formule VII:

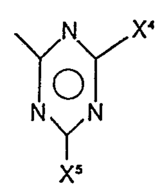

(VII)

dans lequel $X^4$ et $X^5$ représentent des radicaux, identiques ou différents, répondant chacun à l'une des formules II, IV et V,

r, s et t représentent des nombres entiers de 2 à 6, identiques ou différents,

v représente un nombre entier de 0 à 3,

$R^8$ et $R^9$ représentent des radicaux, identiques ou différents, qui ont la signification de $R^5$ et

$R^{10}$ a également les significations qui ont été données ci-dessus pour $R^5$,

$R^1$ a la même signification que $R^6$ ou que T,

$X^3$ représente un radical

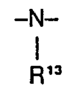

dans lequel $R^{13}$ représente l'un des radicaux qui ont été indiqués pour $R^5$,

Y représente un radical

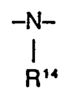

dans lequel $R^{14}$ représente des radicaux $R^5$, identiques ou différents,

$R^3$ représente un alkylène en $C_2$–$C_{18}$, un bis-(propylène-oxy)-alkylène dont la partie alkylène contient de 2 à 12 atomes de carbone, un mono-, di- ou tricyclo-alkylène non substitué ou porteur d'au plus quatre radicaux méthyles, deux atomes de carbone, dans le premier cité, pouvant être remplacés par des atomes N éventuellement porteurs de radicaux propylènes, un arylène en $C_6$–$C_{18}$ ou un aralkylène en $C_7$–$C_{18}$, ou encore

le groupement $-X^3-R^3-Y-$ peut être remplacé par un radical pipérazinylène ou par un radical bicyclique en $C_5$–$C_{12}$ qui contient, dans son noyau, un atome N et qui porte un radical amino et/ou un radical amino-méthylène,

au moins l'un des radicaux $X^1$, $X^2$, $X^3$, Y et $R^1$, dans la formule I, devant contenir un radical de formule VI,

et les composés de formule I étant isotactiques dans le cas où $X^3$ et Y sont identiques et étant atactiques dans le cas où ils sont différents.

2. Procédé de préparation de poly-(bis-triazinylimides) de formule I selon la revendication 1, procédé caractérisé en ce que:

A) on fait d'abord réagir, à une température de 10 à 70 °C, un bis-triazinylimide qui porte des atomes de chlore et qui répond à la formule partielle (A):

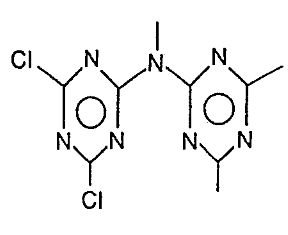

(A),

pour remplacer à chaque fois un des atomes de chlore portés par les noyaux dichloro-triazinyles présents, avec de 0,95 à 1,05 fois la quantité équivalente d'un composé de formule (II), (IV) ou (V) dont la valence libre est saturée par H, ou d'un mélange de composés de ce genre, puis:

B) pour obtenir des bis-triazinylimides polymères on fait réagir, à une température de 50 à 200 °C, un bis-triazinylimide répondant à la formule partielle (B):

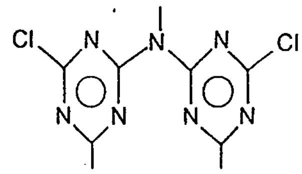

(B)

avec de 0,8 à 1,2 fois la quantité molaire d'une diamine de formule (C):

$$H-X^3-R^3-Y-H \quad (C)$$

dans laquelle $X^3$ et Y ont les significations données à la revendication 1,

toutes les variantes ou étapes opératoires étant exécutées dans des solvants organiques inertes et en présence de quantités équivalentes d'une base minérale jouant le rôle d'accepteur d'acides halohydriques, et les différentes étapes réactionnelles pouvant également être effectuées sans isolement des corps intermédiaires.

3. Application des poly-(bis-triazinylimides) selon la revendication 1 pour la stabilisation de polymères synthétiques.

4. Application selon la revendication 3, caractérisée en ce que les polymères sont des polyoléfines.

5. Application selon la revendication 3, caractérisée en ce que les polymères sont des polymères halogénés, des polyacrylates, des polyméthacrylates ou des homopolymères ou copolymères du styrène.

6. Procédé pour stabiliser des polymères synthétiques contre les effets destructeurs de la lumière, procédé caractérisé en ce qu'on ajoute aux polymères, éventuellement en plus de composés connus à action stabilisante, de 0,01 à 5% en poids, par rapport au polymère, d'un composé selon la revendication 1.

7. Polymères synthétiques stabilisés contre la décomposition par les rayons ultraviolets, polymères dans lesquels il y a, comme stabilisant, de 0,01 à 5% en poids, par rapport au polymère, d'un composé selon la revendication 1.

**Revendications pour l'Etat contractant: AT**

1. Procédé pour préparer des poly-(bis-triazinylimides) répondant à la formule générale (I):

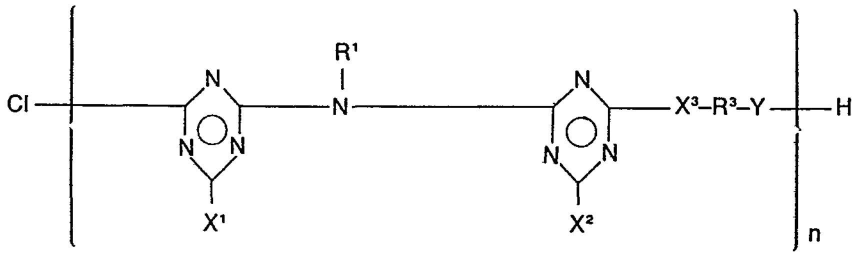
(I),

dans laquelle

n représente un nombre entier de 2 à 10,

$X^1$ et $X^2$ sont identiques ou différents et représentent chacun –Cl, phényle, –OH, –ONa ou un radical répondant à l'une des formules II, III, IV et V:

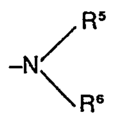
(II),

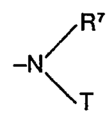
(III),

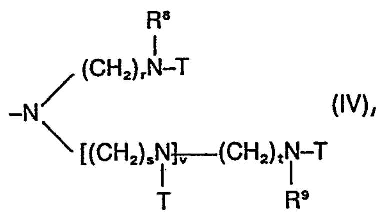
(IV), $-OR^{10}$ (V),

formules dans lesquelles

$R^5$ représente l'hydrogène, ou un alkyle en $C_1$–$C_{18}$, ou un cycloalkyle en $C_5$–$C_{12}$ éventuellement porteur d'un alkyle en $C_1$–$C_4$, ou un alcényle en $C_3$–$C_{12}$, ou un phényle éventuellement porteur d'un ou de deux Cl ou d'un ou de deux radicaux alkyles en $C_1$–$C_4$ ou d'un alcoxy en $C_1$–$C_4$ ou d'un alcoxycarbonyle dont la partie alcoxy contient un ou deux atomes de carbone, ou un phénylalkyle en $C_7$–$C_{14}$, ou un radical de formule VI:

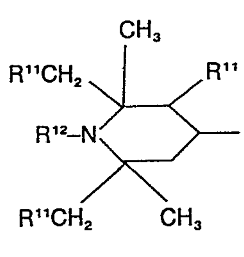
(VI),

dans lequel:

$R^{11}$ représente l'hydrogène ou un méthyle et

$R^{12}$ représente l'hydrogène, un alkyle en $C_1$–$C_4$ éventuellement porteur d'un ou de deux radicaux –OH, un époxy-2,3-propyle, un allyle ou un benzyle,

$R^6$ a les significations données pour $R^5$ et peut en outre représenter un radical hydroxy-alkyle en $C_1$–$C_{18}$, un radical ($C_3$–$C_{21}$)-alcoxy-alkyle ou un radical diméthylamino-alkyle ou diéthylamino-alkyle dont l'alkyle contient de 2 à 5 atomes de carbone, $R^6$ pouvant être identique à $R^5$ ou différent de lui, ou

$R^5$ et $R^6$ forment ensemble, et avec l'atome d'azote qui les unit, un cycle de pyrrolidine ou un cycle de pipéridine, de morpholine ou de perhydro-azépine non substitué ou porteur de un ou deux radicaux alkyles en $C_1$–$C_4$,

$R^7$ a les significations indiquées pour $R^6$ et

T représente un radical de formule VII:

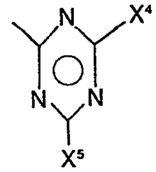
(VII)

dans lequel $X^4$ et $X^5$ représentent des radicaux, identiques ou différents, répondant chacun à l'une des formules II, IV et V,

r, s et t représentent des nombres entiers de 2 à 6, identiques ou différents,

v représente un nombre entier de 0 à 3,

$R^8$ et $R^9$ représentent des radicaux, identiques ou différents, qui ont la signification de $R^5$ et

$R^{10}$ a également les significations qui ont été données ci-dessus pour $R^5$,

$R^1$ a la même signification que $R^6$ ou que T,

$X^3$ représente un radical

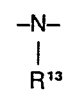

dans lequel $R^{13}$ représente l'un des radicaux qui ont été indiqués pour $R^5$,

Y représente un radical

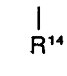

dans lequel $R^{14}$ représente des radicaux $R^5$, identiques ou différents,

$R^3$ représente un alkylène en $C_2$–$C_{18}$, un bis-(propylène-oxy)-alkylène dont la partie alkylène contient de 2 à 12 atomes de carbone, un mono-, di- ou tricyclo-alkylène non substitué ou porteur

d'au plus quatre radicaux méthyles, deux atomes de carbone, dans le premier cité, pouvant être remplacés par des atomes N éventuellement porteurs de radicaux propylènes, un arylène en $C_6$–$C_{18}$ ou un aralkylène en $C_7$–$C_{18}$, ou encore

le groupement $-X^3-R^3-Y-$ peut être remplacé par un radical pipérazinylène ou par un radical bicyclique en $C_5$–$C_{12}$ qui contient, dans son noyau, un atome N et qui porte un radical amino et/ou un radical aminométhylène,

au moins l'un des radicaux $X^1$, $X^2$, $X^3$, Y et $R^1$, dans la formule I, devant contenir un radical de formule VI,

et les composés de formule I étant isotactiques dans le cas où $X^3$ et Y sont identiques et étant atactiques dans le cas où ils sont différents, procédé caractérisé en ce que:

A) on fait réagir, à une température de 10 à 70 °C, un bis-triazinylimide qui porte des atomes de chlore et qui répond à la formule partielle (A):

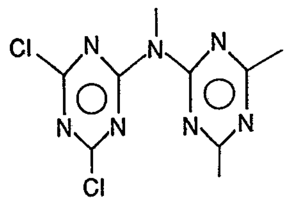

(A)

pour remplacer à chaque fois un des atomes de chlore portés par les noyaux dichloro-tirazinyles présents, avec de 0,95 à 1,05 fois la quantité équivalente d'un composé de formule (II), (IV) ou (V) dont la valence libre est saturée par H, ou d'un mélange de composés de ce genre, puis:

B) pour obtenir des bis-triazinylimides polymères on fait réagir, à une température de 50 à 200 °C, un bis-triazinylimide répondant à la formule partielle (B):

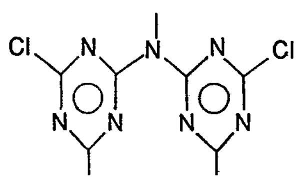

(B)

avec de 0,8 à 1,2 fois la quantité molaire d'une diamine de formule (C):

$$H-X^3-R^3-Y-H \qquad (C)$$

dans laquelle $X^3$ et Y ont les significations données à la revendication 1,

toutes les variantes ou étapes opératoires étant exécutées dans des solvants organiques inertes et en présence de quantités équivalentes d'une base minérale jouant le rôle d'accepteur d'acides halohydriques, et les différentes étapes réactionnelles pouvant également être effectuées sans isolement des corps intermédiaires.

2. Application des composés préparés selon la revendication 1 pour la stabilisation de polymères synthétiques.

3. Application selon la revendication 2, caractérisée en ce que les polymères sont des polyoléfines.

4. Application selon la revendication 2, caractérisée en ce que les polymères sont des polymères halogénés, des polyacrylates, des polyméthacrylates ou des homopolymères ou copolymères du styrène.

5. Procédé pour stabilisier des polymères synthétiques contre les effets destructeurs de la lumière, procédé caractérisé en ce qu'on ajoute aux polymères, éventuellement en plus de composés connus à action stabilisante, de 0,01 à 5% en poids, par rapport au polymère, d'un composé obtenu selon la revendication 1.

6. Polymères synthétiques stabilisés contre la décomposition par les rayons ultraviolets, polymères dans lesquels il y a, comme stabilisant, de 0,01 à 5% en poids, par rapport au polymère, d'un composé préparé selon la revendication 1.